# FASCICULE DE BREVET EUROPEEN

(11) **EP 1 824 733 B1**
(45) Date de publication et mention de la délivrance du brevet: **05.08.2009**
(21) Numéro de dépôt: 05819331.9
(22) Date de dépôt: 24.11.2005
(51) Int. Cl.: B64C 39/02

(54) **AERONEF SUPER-TRANSPORTEUR**
SUPERTRANSPORTERFLUGZEUG
SUPER-TRANSPORTER AIRCRAFT

(30) Priorité: 09.12.2004 FR 0452911
(43) Date de publication de la demande: 29.08.2007
(73) Titulaire: AIRBUS France, 31000 Toulouse Cedex 9 (FR)
(72) Inventeur: GUERING, Bernard, F-31850 Montrabe (FR)
(74) Mandataire: Lebrette, Camille
(86) Numéro de dépôt international: PCT/FR2005/050990
(87) Numéro de publication internationale: WO 2006/061531

(56) Documents cités:
- FR-A- 2 783 495
- US-A- 2 387 527
- US-A- 3 972 492
- US-A1- 2004 135 031

## Description

L'invention concerne un aéronef super-transporteur transportant des éléments d'un aéronef secondaire dans un compartiment de fret. Par aéronef secondaire, on entend un aéronef de plus petite envergure que l'aéronef super-transporteur.

L'aéronef super-transporteur selon l'invention trouve des applications dans le domaine de la construction d'aéronefs, en permettant de rassembler sur un même site de montage différents éléments d'un aéronef secondaire fabriqués à des endroits géographiques éloignés. Par éléments d'un aéronef secondaire, on entend différentes parties de l'aéronef, telles qu'une cabine de pilotage, des tronçons de fuselage, des voilures, des moteurs etc.

La fabrication d'un aéronef nécessite, selon l'élément fabriqué, des compétences et des moyens, notamment techniques, multiples. Aussi, la fabrication d'un aéronef se fait généralement de manière séquentielle, sur différents sites de construction pouvant être éloignés géographiquement les uns des autres de plusieurs milliers de kilomètres. Les voilures peuvent toutes être fabriquées à un endroit donné, tandis qu'un autre site, lui, ne va fabriquer que des tronçons de fuselage etc. L'étape finale d'assemblage de tous ces éléments d'aéronef oblige à rassembler tous les éléments nécessaires à un aéronef sur un site d'assemblage. Il est donc nécessaire de transporter les différents éléments d'aéronef, après leur fabrication, jusqu'à ce site d'assemblage.

Depuis quelques dizaines d'années, le transport de ces éléments d'aéronef par voies maritimes, routières ou ferroviaires, a été abandonné au profit d'un transport par voies aériennes. Pour se faire, des aéronefs super-transporteur ont été développés. On connaît notamment un aéronef super-transporteur réalisé à partir de l'aéronef A300-600R d'AIRBUS. Un compartiment de fret d'un tel aéronef super-transporteur a un diamètre d'environ 7.4 mètres et une longueur d'environ 37.7 mètres, permettant le transport d'une charge supérieure à 45 tonnes. Par compartiment de fret, on entend une zone de cargaison dans l'aéronef super-transporteur, dans laquelle l'élément d'aéronef secondaire à transporter est logé.

Un inconvénient d'un tel aéronef super-transporteur est son poids à vide. Par poids à vide, on entend le poids de l'aéronef super-transporteur lorsque le compartiment de fret est dépourvu de fret, le poids à vide représentant donc le poids intrinsèque de l'aéronef super-transporteur. L'aéronef super-transporteur a un poids à vide élevé notamment du fait de la quantité de matériaux nécessaire à sa construction. Un poids de l'élément destiné à être transporté peut atteindre plusieurs dizaines de tonnes. Le poids de l'élément transporté s'ajoute donc au poids à vide de l'aéronef super-transporteur, un poids total, aéronef super-transporteur plus fret, peut alors atteindre plusieurs centaines de tonnes. L'aéronef super-transporteur consomme une quantité importante de carburant lors du transport de l'élément d'aéronef secondaire.

Aussi, un coût du transport des éléments d'aéronefs secondaires par voies aériennes est élevé.

De plus, l'aéronef super-transporteur n'a pas une grande autonomie de vol. Lorsqu'il doit parcourir une grande distance, l'aéronef super-transporteur doit le plus souvent faire au moins une escale pour être réapprovisionné en carburant.

Un but de l'invention est de réaliser un aéronef super-transporteur dont un poids à vide est peu élevé. Par poids peu élevé, on entend que le poids à vide de l'aéronef super-transporteur est par exemple inférieur à un poids du fret destiné à être transporté. Par poids peu élevé, on entend également un poids par exemple inférieur à celui d'un avion de même taille et destiné à une même utilisation. Un autre but de l'invention est de réaliser un aéronef super-transporteur dont un volume du fret transporté peut être supérieur, par endroits, à un volume du fuselage de l'aéronef super-transporteur et ainsi permettre le transport de fret encombrant.

Pour arriver à ce résultat, dans l'invention, on tient compte des propriétés physiques et mécaniques des éléments d'aéronefs secondaires destinés à être transportés par l'aéronef super-transporteur. Par aéronef secondaire, on entend tout appareil qui peut se soutenir dans l'atmosphère grâce à des réactions de l'air autres que les réactions de l'air sur la surface de la terre. Un aéronef secondaire peut donc être un avion, une fusée, un missile etc. En effet, les éléments d'aéronefs secondaires étant destinés, une fois assemblés, à former un aéronef, ils ont tous individuellement des propriétés aérodynamiques permettant de résister aux efforts notamment de pression et de compression auxquels l'aéronef est soumis en vol.

Ainsi, l'aéronef super-transporteur selon l'invention peut être au moins partiellement dépourvu, à vide, de rigidité structurale et donc des propriétés aérodynamiques nécessaires à un vol, mais les acquiert, une fois chargé, du fait de la présence de l'élément transporté. Par au moins partiellement, on entend qu'un fuselage dudit aéronef super-transporteur, est dépourvu desdites propriétés aérodynamiques au moins à l'endroit du compartiment de fret, au moins pour un état dit démonté, c'est-à-dire à vide, dans lequel des renforts du compartiment de fret sont démontés, en attente de recevoir une nouvelle charge. Ces renforts peuvent être fixés à la charge conférant la rigidité. Le fret participe donc à la tenue structurale de l'aéronef super-transporteur. Cela permet de diminuer la quantité de matériaux nécessaire à la construction de l'aéronef super-transporteur, notamment quant à une épaisseur des cadres formant le fuselage. Ces renforts peuvent également être fixés entre eux par une structure de transport à vide, afin de conférer à l'aéronef super-transporteur la rigidité suffisante, à vide, pour autoriser un vol. L'état de l'art dans lequel le fret participe à la rigidité de l'avion transporteur est illustré par le document US 2004/0135031A1.

Afin d'optimiser une coopération entre l'aéronef super-transporteur et le fret, l'aéronef super-transporteur est spécifiquement adapté à un élément d'aéronef secondaire à transporter. En effet, selon les éléments d'aéronefs secondaires, un encombrement, un poids, une résistance etc. varient, pouvant nécessiter des adaptations particulières de l'aéronef super-transporteur. Par coopération, on entend que la charge, ou le fret, contribue à la tenue structurale de l'aéronef super-transporteur, notamment en lui conférant une rigidité suffisante pour le vol.

L'invention a donc pour objet un aéronef super-transporteur selon la revendication 1.

L'aéronef super-transporteur selon l'invention peut également comporter tout ou partie des caractéristiques supplémentaires suivantes :
- les moyens rigidifiant sont munis d'un dispositif de solidarisation pour solidariser l'élément transporté au fuselage de l'aéronef super-transporteur, le dispositif de solidarisation étant apte à reprendre des efforts auxquels l'aéronef super-transporteur est soumis.
- le dispositif de solidarisation comporte au moins deux échelles solidaires d'une paroi interne du fuselage de l'aéronef super-transporteur, et une pluralité de moyens d'accrochage, une première extrémité d'un moyen d'accrochage étant solidaire d'une échelle, une seconde extrémité du moyen d'accrochage étant destinée à être fixée à l'élément transporté.
- au moins une échelle est apte à avoir deux positions stables, respectivement position de chargement dans laquelle l'échelle suit un contour de la paroi interne du fuselage, et position d'utilisation dans laquelle l'échelle s'étend en saillie de la paroi interne du fuselage, en direction de l'intérieur du fuselage de l'aéronef super-transporteur.
- les moyens d'accrochage sont des moyens télescopiques.
- l'élément transporté est un tronçon de fuselage de l'aéronef secondaire, la seconde extrémité d'un moyen d'accrochage coopérant avec un évidement formant un emplacement pour hublot du tronçon de fuselage de l'aéronef secondaire.
- l'élément transporté est une demi-voilure.

L'invention sera mieux comprise à la lecture de la description qui suit et à l'examen des figures qui l'accompagnent. Celles-ci sont présentées à titre indicatif et nullement limitatif de l'invention. Les figures représentent :
- Figure 1 : une représentation schématique d'un aéronef super-transporteur et d'un fret formé par un tronçon de fuselage d'un aéronef secondaire, selon un exemple de réalisation de l'invention ;
- Figure 2 : une représentation en coupe transversale de la figure 1, à l'endroit d'un compartiment de fret de l'aéronef super-transporteur ;
- Figures 3 à 5 : des représentations schématiques de dispositifs de solidarisation d'un élément d'aéronef secondaire à transporter au compartiment de fret de l'aéronef super-transporteur selon des exemples de réalisation de l'invention ;
- Figure 6 : une vue de côté de l'aéronef super-transporteur de la figure 1 ;
- Figure 7 : une représentation schématique d'un aéronef super-transporteur et d'un fret formé par un segment de voilure d'un aéronef secondaire, selon un exemple de réalisation de l'invention ;
- Figure 8 : une représentation en coupe transversale de la figure 7, à l'endroit d'un compartiment de fret de l'aéronef super-transporteur ;
- Figure 9 : une représentation en coupe transversale de la figure 1, à l'endroit d'un compartiment de fret à vide de l'aéronef super-transporteur.

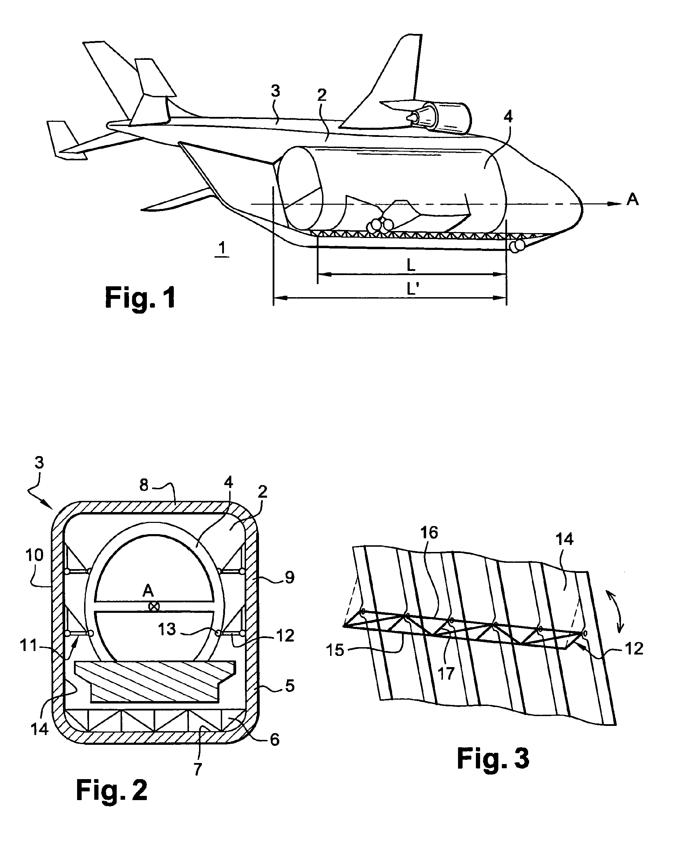

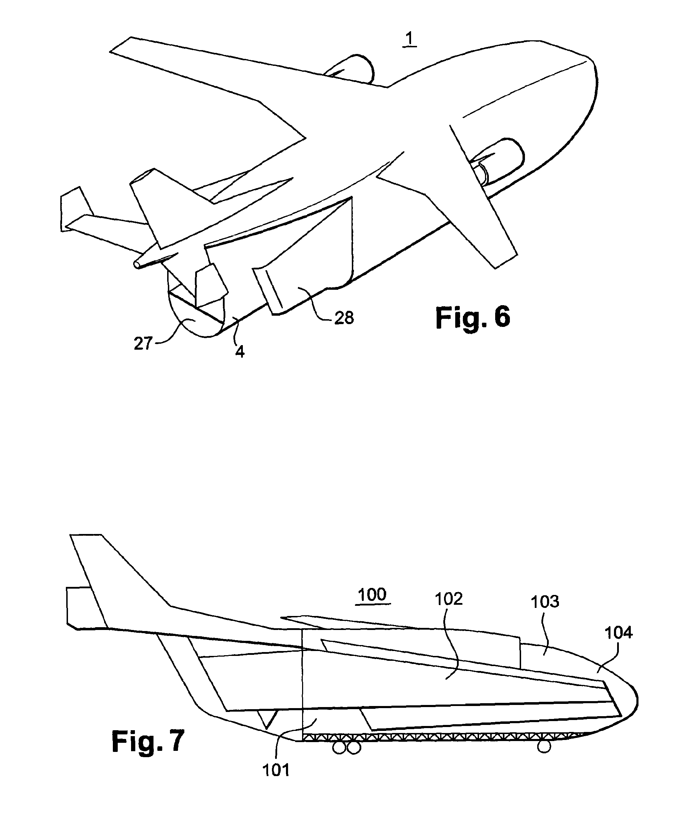

Sur la figure 1 est représenté un aéronef super-transporteur 1. Un compartiment de fret 2, situé à l'intérieur d'un fuselage 3 transporte un tronçon 4 de fuselage d'un aéronef secondaire. Une longueur L du tronçon 4 est inférieure à une longueur L' du compartiment de fret 2. Par longueur L ou L', on entend la dimension, du tronçon 4 ou du compartiment de fret 2 s'étendant parallèlement à un axe A du compartiment de fret 2. Ainsi, le tronçon 4 est entièrement contenu dans un volume interne du compartiment de fret 2. Il est également possible de transporter un élément d'aéronef secondaire dont une longueur est supérieure à la longueur L' du compartiment de fret 2, comme cela sera expliqué par la suite (figure 6).

Sur la figure 2, on peut voir l'aéronef super-transporteur 1 en coupe transversale à l'endroit du compartiment de fret 2. Une paroi 5 du fuselage 3 à l'endroit du compartiment de fret 2 est au moins partiellement dépourvue de rigidité structurale. L'aéronef super-transporteur 1 à vide n'est pas en mesure de résister aux efforts de pression et compression exercés contre la paroi 5 du fuselage 3 en vol. La rigidité structurale nécessaire pour autoriser le vol de l'aéronef super-transporteur 1 est conférée par le tronçon 4 de fuselage d'aéronef secondaire que l'aéronef super-transporteur 1 transporte.

Comme cela est représenté sur la figure 2, un renforcement 6 de la paroi 5 peut être prévu à l'endroit d'une base 7 du compartiment de fret 2. Par base 7, on entend la partie du compartiment de fret 2 formant un plancher du fuselage 3, sur lequel l'élément à transporter est destiné à reposer. La base 7 doit soutenir une charge dont un poids peut atteindre plusieurs dizaines de tonnes. Il peut donc être nécessaire de conférer une rigidité structurale propre au compartiment de fret 2 à l'endroit de cette base 7, afin que la paroi 5 à l'endroit de la base 7 ne cède, ou s'affaisse, pas lorsque le compartiment de fret 2 est chargé. Par contre, à l'endroit d'un sommet 8 et de parois latérales 9 et 10, des matériaux utilisés pour former une ossature et/ou une épaisseur de ladite ossature sont insuffisants pour assurer une rigidité structurale, au moins en vol, au fuselage 3. Par ossature, on entend la carcasse de l'aéronef super-transporteur 1, c'est-à-dire les différentes plaques formant l'aéronef super-transporteur 1. Le fret, consistant dans cet exemple en un tronçon de fuselage 4, a une rigidité structurale suffisante pour conférer la rigidité nécessaire au vol de l'aéronef super-transporteur 1.

Le tronçon 4 de fuselage est arrimé au compartiment de fret 2 par un dispositif de solidarisation 11 susceptible d'encaisser des efforts auxquels l'aéronef super-transporteur 1 ainsi que le tronçon 4 sont soumis en vol. Le dispositif de solidarisation 11 permet également d'empêcher tout déplacement du tronçon 4 à l'intérieur du compartiment de fret 2.

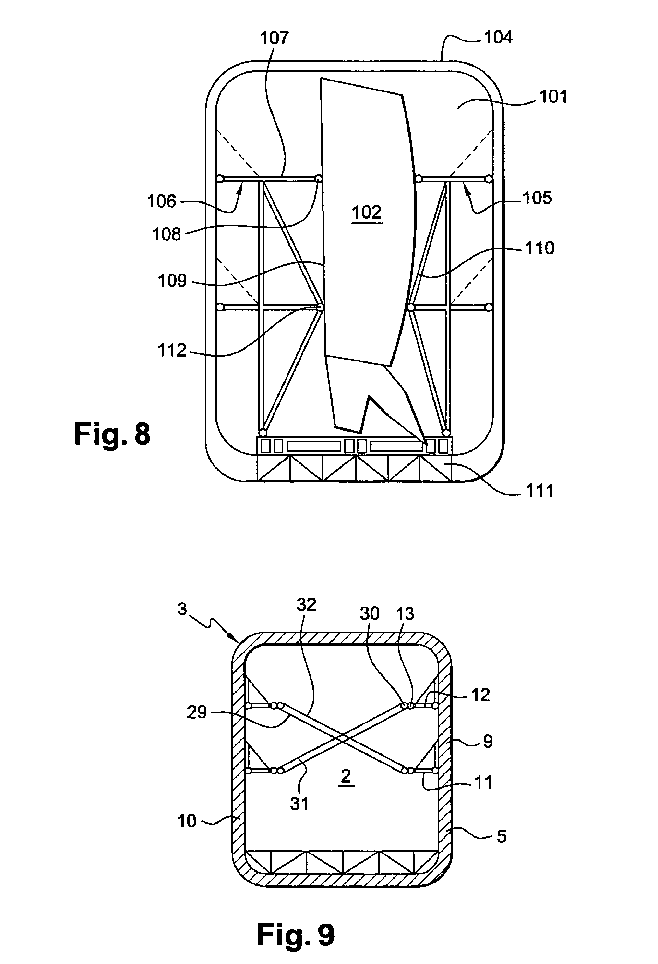

Comme on le verra plus en détail par la suite, lorsqu'on souhaite utiliser l'aéronef super-transporteur 1 à vide, par exemple pour le ramener à sa base après le transport du tronçon de fuselage 4, il est possible de conférer audit aéronef super-transporteur 1 une rigidité suffisante pour voler, par l'intermédiaire de structures de transport à vide 29 (figure 9), solidarisées au dispositif de solidarisation 11.

Dans l'exemple représenté à la figure 2, le dispositif de solidarisation 11 est formé de quatre échelles 12 et de moyens d'accrochage 13. Les échelles 12 sont solidaires d'une face interne 14 des parois latérales 9 et 10 et sont disposées deux par deux sur chacune desdites parois latérales 9 et 10. Les deux échelles 12 situées sur une même paroi latérale 9 ou 10 sont disposées l'une en dessous de l'autre, un axe de chaque échelle 12 s'étendant parallèlement à l'axe A du compartiment de fret 2. Les échelles 12 s'étendent en saillie de la paroi interne 14 du fuselage 3, en direction du tronçon 4 de fuselage d'aéronef secondaire, de manière à ce que les moyens d'accrochage 13 puissent être fixés au tronçon 4 de fuselage.

Sur la figure 3 est représenté une échelle 12 solidaire de la face interne 14 la paroi latérale 9 ou 10 du fuselage 3 de l'aéronef super-transporteur 1. Des montants 15 et 16 de l'échelle 12 s'étendent parallèlement à l'axe A de l'aéronef super-transporteur 1, et des barreaux 17 de liaison forment des liaisons mécaniquement résistantes entre les deux montants 15 et 16.

Dans un exemple particulier de réalisation de l'invention, tout ou partie des échelles 12 du dispositif de solidarisation 11 peuvent être aptes à avoir deux positions stables. Dans une première position, ou position de chargement (non représentée), l'échelle 12 ne s'étend pas en saillie de la paroi 9 ou 10, mais suit au contraire un contour de ladite paroi 9 ou 10, de manière à diminuer un encombrement de l'échelle 12 dans le compartiment de fret 2. La position de chargement permet ainsi d'introduire plus facilement le tronçon 4 de fuselage, ou tout autre élément destiné à être transporté par l'aéronef super-transporteur 1, dans le compartiment de fret 2. En effet, le tronçon 4 ne risque pas de venir en butée contre l'échelle 12 au cours du chargement, ni de casser ladite échelle 12. Une fois le chargement effectué, l'échelle 12 est amenée dans une deuxième position stable, ou position d'utilisation, dans laquelle elle s'étend en saillie de la paroi 9 ou 10 (figures 2 et 3). Dans la position de chargement, les moyens d'accrochage 13 peuvent être fixés au tronçon 4. Il est possible de prévoir de passer de l'une à l'autre des positions stables, par simple basculement, ou rotation, autour d'un des montants 15 ou 16 solidaires de la face interne 14 de la paroi 9 ou 10.

Il est possible de prévoir que seules les échelles 12 situées sur une des deux parois latérales 9 ou 10 puissent avoir les deux positions stables, tandis que les échelles 12 situées sur la paroi latérale 9 ou 10 opposée sont maintenues en permanence dans la position d'utilisation. Il est également possible de prévoir que l'ensemble des échelles 12 puisse avoir ces deux positions stables.

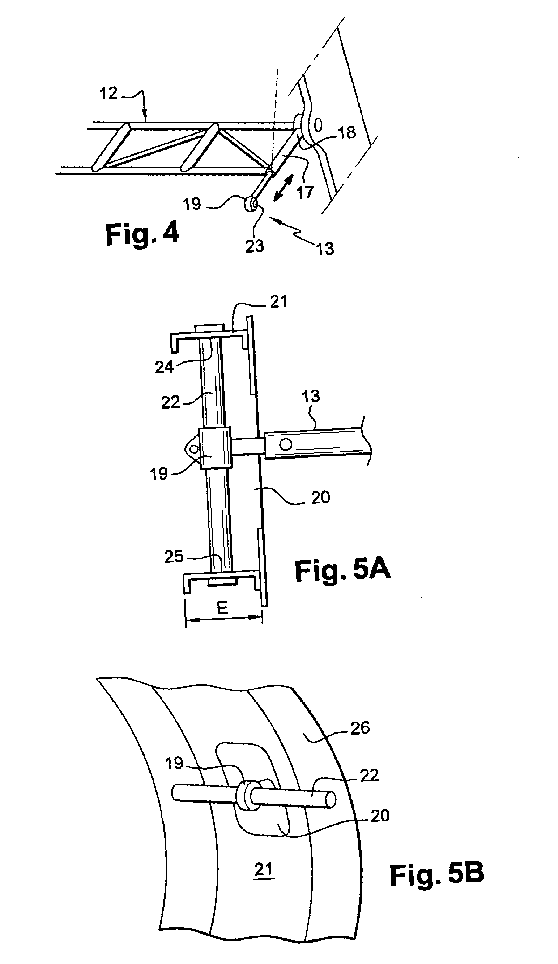

Sur la figure 4, on peut voir un exemple de réalisation d'un moyen d'accrochage 13. Une première extrémité 18 du moyen d'accrochage 13 est solidaire de l'échelle 12. Une deuxième extrémité 19 du moyen d'accrochage 13, ou extrémité libre, s'étend en saillie de l'échelle 12, en direction de l'élément à transporter. La deuxième extrémité 19 du moyen d'accrochage 13 peut se fixer de manière réversible à l'élément à transporter, afin d'arrimer ledit élément à transporter dans le compartiment de fret 2.

Dans l'exemple représenté à la figure 4, le moyen d'accrochage 13 est télescopique. Le moyen d'accrochage 13 est ainsi apte à coulisser dans un corps cylindrique creux d'un des barreaux de liaison 17 de l'échelle 12. L'utilisation de moyens d'accrochage 13 télescopiques permet notamment de diminuer l'encombrement du dispositif de solidarisation 11 lorsqu'il n'est pas utilisé. En effet, dans ce cas, les moyens d'accrochage 13 peuvent être entièrement contenus dans les barreaux de liaison 17 de l'échelle 12. Par ailleurs, de tels moyens d'accrochage 13 télescopiques permettent au dispositif de solidarisation 11 de s'adapter à différents volumes et différentes formes de chargement, puisque les moyens d'accrochage 13 télescopiques peuvent s'étendre plus ou moins hors des barreaux de liaison 17 afin de venir au contact de l'élément à transporter auquel ils doivent être fixés.

Les moyens d'accrochage 13 peuvent être fixés de différentes façons à l'élément à transporter. Notamment, une fixation des moyens d'accrochage 13 peut varier en fonction de la nature de l'élément d'aéronef secondaire à transporter.

Sur la figure 5A, on peut voir un premier exemple de fixation d'un moyen d'accrochage 13 au tronçon de fuselage 4 d'un aéronef secondaire. Le moyen d'accrochage 13 traverse un évidement 20 ménagé dans une épaisseur E d'une paroi 21 du tronçon 4 de fuselage. L'évidement 20 peut être destiné, par la suite, à former un hublot dans le tronçon 4. L'extrémité libre 19 du moyen d'accrochage 13 est située dans l'épaisseur E de la paroi 21 du tronçon 4 de fuselage, c'est-à-dire que le moyen d'accrochage 13 ne traverse que partiellement l'épaisseur E. L'extrémité libre 19 est munie d'un orifice 23 (figure 4) traversé par une tige 22. La tige 22 s'étend parallèlement à l'axe A du compartiment de fret 2. Chaque extrémité 24 et 25 de la tige 22 traverse l'épaisseur E de la paroi 21 du tronçon 4, de manière à ce que les extrémités 24 et 25 de la tige 22 soient situées de part et d'autre de l'évidement 20. La tige 22 peut alors être maintenue par tous moyens en position dans l'épaisseur de la paroi 21.

Sur la figure 5B est représenté un autre exemple de réalisation de la fixation d'un moyen d'accrochage 13 sur le tronçon 4 de fuselage d'aéronef secondaire. L'extrémité libre 19 du dispositif d'accrochage 13 pénètre dans l'évidement 20 destiné à former un hublot. La tige 22 s'étend sensiblement parallèlement à l'échelle 12 (non visible) de manière à venir en butée contre une face interne 26 de la paroi 21 du tronçon 4 de fuselage d'aéronef secondaire qui borde l'évidement 20.

En utilisant les évidements 20 destinés à former les hublots du tronçon 4 de fuselage, on assure différents points d'ancrage, ou d'arrimage, du tronçon 4 de fuselage sur la paroi interne 14 du compartiment de fret 2 de l'aéronef super-transporteur 1. Ainsi, sur un tronçon 4 de fuselage de l'aéronef secondaire, il peut par exemple y avoir dix points d'ancrages formés par dix évidements 20 destinés à former dix hublots.

Bien entendu, il est également possible d'utiliser d'autres parties du tronçon 4 de fuselage pour fixer les moyens d'accrochage 13. Il est également possible de ménager des éléments de fixation sur le tronçon 4 de fuselage, afin d'accrocher les moyens d'accrochage 13, lesdits moyens de fixation pouvant être supprimés après le transport.

Sur la figure 6, on peut voir une représentation de l'aéronef super-transporteur 1 de l'invention muni d'un tronçon 4 de fuselage. Une longueur L du tronçon 4 est strictement supérieure à une longueur L' du compartiment de fret 2 de l'aéronef super-transporteur 1. Aussi, une extrémité arrière 27 du tronçon 4 est située à l'extérieur du compartiment de fret 2. Par extrémité arrière, on entend extrémité opposée à un cabine de pilotage de l'aéronef super-transporteur 1. Une extrémité arrière 28 de l'aéronef super-transporteur 1, à l'endroit du compartiment de fret 2, est ouverte, de manière à ce que le tronçon 4 puis s'étendre à l'extérieur. Une telle solution permet de transporter des éléments d'aéronef secondaire très volumineux.

Plus le nombre de tronçons pour réaliser un même fuselage augmente, plus la rigidité structurale du fuselage après assemblage est difficile à obtenir. En effet, du fait du grand nombre de petits tronçons solidarisés les uns aux autres pour former un fuselage d'aéronef secondaire, ledit fuselage peut avoir une certaine fragilité à l'endroit des zones de solidarisation, cette fragilité pouvant être préjudiciable à une sécurité d'utilisation. Avec la solution présentée à la figure 6, il n'est plus nécessaire de sectionner le fuselage d'un aéronef secondaire en une multitude de tronçons de petites tailles, ce qui permet de résoudre le problème de rigidité exposé ci-dessus.

Sur la figure 9, on peut voir une coupe transversale de l'aéronef super-transporteur 1 à l'endroit du compartiment de fret 2 à vide, c'est-à-dire dépourvu d'élément d'aéronef secondaire à transporter. La rigidité est alors conférée par une pluralité de croisillons 29 solidarisés aux échelles 12 (un seul croisillon 30 visible sur la figure 9). Les croisillons 29 sont par exemple réalisés en acier trempé. Chaque croisillon 29 est formé de deux axes 31 et 32 disposés à environ 100°, +/-50°, selon la distance séparant deux échelles 12 situées sur un même flanc 9 ou 10 du fuselage 3. Chaque extrémité 30 des axes 31 et 32 est solidarisée à un moyen d'accrochage 13 d'une échelle 12. Le nombre de croisillons 29 utilisé peut varier en fonction de la longueur L' du compartiment de fret 2, de la capacité de chaque croisillon à reprendre les efforts etc.

Dans un exemple de réalisation particulier des croisillons 29, on peut prévoir que lesdits croisillons sont articulés de manière à prendre deux positions stables différentes. Dans la première position stable, les axes 31 et 32 sont séparés d'un angle d'environ 100°. Dans la deuxième position stable, à l'inverse, les axes 31 et 32 s'étendent parallèlement l'un à l'autre, de manière à ne former qu'un axe double. Ainsi, un encombrement des croisillons 29 dans la deuxième position stable est faible, ce qui peut faciliter leur transport dans l'aéronef super-transporteur 1 lorsque celui-ci transporte le tronçon de fuselage 4.

Sur la figure 7 est représenté un aéronef super-transporteur 100 dont un compartiment de fret 101 comporte une demi-voilure 102. La demi-voilure 102 s'étend sur toute une longueur du compartiment de fret 101. Dans cet exemple de réalisation, un cabine de pilotage 103 est situé au-dessus d'un fuselage 104, et non dans un prolongement du fuselage 104 comme c'est généralement le cas dans un aéronef, afin d'optimiser la longueur du compartiment de fret 101. Ainsi, on augmente aussi la longueur possible du chargement que peut contenir le compartiment de fret 101.

Sur la figure 8, on peut voir une coupe transversale de la figure 7. la voilure 102 est maintenue en position dans le compartiment de fret 101 au moyen d'un dispositif de solidarisation 105.

Le dispositif de solidarisation 105 est muni de quatre échelles 106 et de moyens d'accrochage 107. Les moyens d'accrochage 107 sont solidaires d'une part des échelles 106 et d'autre part de la demi-voilure 102. Des extrémités libres 108 des moyens d'accrochage 107, destinées à être fixées à la demi-voilure 102, sont par exemple fixées sur la demi-voilure 102 par l'intermédiaire de points de manutention 112 ménagés sur la surface externe 109 de ladite demi-voilure 102.

Il est possible de renforcer le dispositif de solidarisation 105 par un outillage de renforcement 110. L'outillage de renforcement 110 permet de prolonger un arrimage entre le dispositif de solidarisation 105 et la demi-voilure 102 jusqu'à une base 111, ou plancher, du compartiment de fret 101 de l'aéronef super-transporteur 100. Par ailleurs, comme dans les exemples décrits précédemment, le plancher 111 du compartiment de fret 101 peut être renforcé afin de supporter le poids de la voilure 102.

Selon une envergure de la demi-voilure 102, il est possible de transporter dans le compartiment de fret 101 ladite demi-voilure 102 dépourvue de bord d'attaque (figure 8). Le bord d'attaque peut être transporté séparément, seul ou avec d'autres éléments d'aéronef secondaire de faibles encombrements. Chaque demi-voilure 102 est assemblée avec un bord d'attaque correspondant lors du montage de l'aéronef secondaire.

## Revendications

1. Aéronef super-transporteur (1, 100) pour transporter du fret encombrant rigidifiant sa structure, **caractérisé en ce qu'**il transporte au moins un élément (4, 102) d'un aéronef secondaire, et **en ce qu'**il comporte des moyens rigidifiants pour qu'une rigidité structurale du fuselage (3, 104) de l'aéronef super-transporteur soit conférée, au moins partiellement, par l'élément (4, 102) d'aéronef secondaire transporté.

2. Aéronef super-transporteur selon la revendication 1, **caractérisé en ce que** les moyens rigidifiants sont munis d'un dispositif de solidarisation (11, 105) pour solidariser l'élément de l'aéronef secondaire transporté au fuselage de l'aéronef super-transporteur, le dispositif de solidarisation étant apte à reprendre des efforts auxquels l'aéronef super-transporteur est soumis,

3. Aéronef super-transporteur selon la revendication 2, **caractérisé en ce que** le dispositif de solidarisation comporte au moins deux échelles (12, 106), solidaires d'une paroi interne (14) du fuselage de l'aéronef super-transporteur, et une pluralité de moyens d'accrochage (13, 107), une première extrémité (18) d'un moyen d'accrochage étant solidaire d'une échelle, une seconde extrémité (19, 108) du moyen d'accrochage étant destinée à être fixée à l'élément de l'aéronef secondaire transporté.

4. Aéronef super-transporteur selon la revendication 3, **caractérisé en ce qu'**au moins une échelle est apte à avoir deux positions stables, respectivement position de chargement dans laquelle l'échelle suit un contour de la paroi interne du fuselage, et position d'utilisation dans laquelle l'échelle s'étend en saillie de la paroi interne du fuselage, en direction de l'intérieur du fuselage de l'aéronef super-transporteur.

5. Aéronef super-transporteur selon l'une des revendications 3 à 4, **caractérisé en ce que** les moyens d'accrochage sont des moyens télescopiques.

6. Aéronef super-transporteur selon l'une des revendications 3 à 5, **caractérisé en ce que** l'élément transporté est un tronçon de fuselage (4) d'aéronef secondaire.

7. Aéronef super-transporteur selon la revendication 6, **caractérisé en ce que** la seconde extrémité d'un moyen d'accrochage coopère avec un évidement (20) formant un emplacement pour hublot du tronçon de fuselage de l'aéronef secondaire.

8. Aéronef super-transporteur selon l'une des revendications 1 à 5, **caractérisé en ce que** l'élément transporté est une demi-voilure (102) d'aéronef secondaire.

## Claims

1. A super-transporter aircraft (1, 100) for transporting bulky loads, rigidifying its structure, **characterized in that** it transports at least one part (4, 102) of a secondary aircraft, and **in that** it includes rigidifying means so that a structural rigidity of a fuselage (3, 104) of the super-transporter aircraft is conferred at least partially by the transported part (4, 102) of the secondary aircraft.

2. A super-transporter aircraft according to claim 1, **characterized in that** the rigidifying means are fitted with an integrating device (11, 105) to integrate the transported part of the secondary aircraft to the fuselage of the super-transporter aircraft, the integrating device being capable of absorbing the stresses to which the super-transporter aircraft is subjected.

3. A super-transporter aircraft according to claim 2, **characterized in that** the integrating device includes at least two ladders (12, 106), integral to an internal wall (14) of the super-transporter aircraft's fuselage, and a plurality of means for fastening (13, 107), a first end (18) of a means for fastening being integral with a ladder, a second end (19, 108) of the means for fastening being destined to be fixed to the transported part.

4. A super-transporter aircraft according to claim 3, **characterized in that** at least one ladder is able to have two respective stable positions, a loading position in which the ladder follows the contours of the internal wall of the fuselage, and an operational position in which the ladder extends by protruding from the internal wall of the fuselage, towards the interior of the fuselage of the super-transporter aircraft.

5. A super-transporter aircraft according to one of claims 3 to 4, **characterized in that** the means for fastening are telescopic.

6. A super-transporter aircraft according to one of claims 3 to 5, **characterized in that** the part for transporting is a fuselage section (4) of a secondary aircraft.

7. A super-transporter aircraft according to claim 6, **characterized in that** the second end of a means for fastening cooperates with a cavity (20) forming an emplacement for a fuselage section porthole of the secondary aircraft.

8. A super-transporter aircraft according to one of claims 1 to 5, **characterized in that** the part for transporting is a half-wing (102) of the secondary aircraft.

## Patentansprüche

1. Supertransporterflugzeug (1, 100) für den Transport von sperriger Fracht zur Versteifung seiner Struktur, **dadurch gekennzeichnet, dass** es zumindest ein Element (4, 102) eines Zweitflugzeugs transportiert, und **dadurch**, dass versteifende Mittel enthält, damit dem Flugzeugrumpf des Supertransporterflugzeugs durch das transportierte Element des Zweitflugzeugs (4, 102) zumindest teilweise eine strukturelle Steifigkeit (3, 104) verliehen wird.

2. Supertransporterflugzeug nach Anspruch 1, **dadurch gekennzeichnet, dass** die versteifenden Mittel mit einer Verbindungsvorrichtung (11, 105) zum Verbinden des transportierten Elements des Zweitflugzeugs mit dem Rumpf des Supertransporterflugzeugs versehen sind, wobei die Verbindungsvorrichtung in der Lage ist, jene Kräfte aufzunehmen, denen das Supertransporterflugzeug ausgesetzt ist.

3. Supertransporterflugzeug nach Anspruch 2, **dadurch gekennzeichnet, dass** die Verbindungsvorrichtung zumindest zwei Leitern (12, 106) enthält, die mit einer Innenwand (14) des Rumpfes des Supertransporterflugzeugs verbunden sind, und eine Vielzahl an Mitteln zum Verhaken (13, 107), wobei ein erstes Ende (18) eines Mittels zum Verhaken mit einer Leiter verbunden ist und ein zweites Ende (19, 108) des Mittels zum Verhaken dazu bestimmt ist, am transportierten Element des Zweitflugzeugs befestigt zu werden.

4. Supertransporterflugzeug nach Anspruch 3, **dadurch gekennzeichnet, dass** zumindest eine Leiter in der Lage ist, zwei stabile Positionen einzunehmen, nämlich eine Ladeposition, bei der die Leiter einer Kontur der Innenwand des Rumpfes folgt und eine Nutzposition, bei der sich die Leiter überstehend von der Innenwand des Rumpfes in Richtung des Innenraumes des Rumpfes des Supertransporterflugzeugs erstreckt.

5. Supertransporterflugzeug nach einem der Ansprüche 3 bis 4, **dadurch gekennzeichnet, dass** die Mittel zum Verhaken ausziehbare Mittel sind.

6. Supertransporterflugzeug nach einem der Ansprüche 3 bis 5, **dadurch gekennzeichnet, dass** das transportierte Element ein Teilstück des Rumpfes (4) des Zweitflugzeugs ist.

7. Supertransporterflugzeug nach Anspruch 6, **dadurch gekennzeichnet, dass** das zweite Ende eines Mittels zum Verhaken mit einer Ausnehmung (20) zusammenwirkt, die einen Platz für eine Fensterluke des Teilstücks des Rumpfes des Zweitflugzeugs bildet.

8. Supertransporterflugzeug nach einem der Ansprüche 1 bis 5, **dadurch gekennzeichnet, dass** das transportierte Element eine halbe Tragfläche (102) des Zweitflugzeugs ist.
